(19) **Europäisches Patentamt / European Patent Office / Office européen des brevets**

(11) **EP 4 657 377 A1**

(12) # EUROPEAN PATENT APPLICATION

(43) Date of publication:
**03.12.2025 Bulletin 2025/49**

(21) Application number: **24178223.4**

(22) Date of filing: **27.05.2024**

(51) International Patent Classification (IPC):
***G06T 11/00*** *(2006.01)*

(52) Cooperative Patent Classification (CPC):
**G06T 11/00**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Esko Software BV**
**9051 Ghent (BE)**

(72) Inventor: **Goossens, Rian**
**CH-8105 Regensdorf (CH)**

(74) Representative: **Jonas, Hans-Hermann**
**X-Rite Europe GmbH**
**Althardstrasse 70**
**8105 Regensdorf (CH)**

Remarks:
Claim 16-21 is deemed to be abandoned due to non-payment of the claims fee (Rule 45(3) EPC).

(54) **METHOD AND SYSTEMS FOR REMOTE PRESS APPROVAL**

(57) A method for creating a virtual 3D image of a printed product. Images of the printed product are captured from a plurality of viewing perspectives, each image defining a frame, and each frame is compared to a reference image using a feature matching algorithm to generate a homography matrix defining the frame relative to the reference image. The homography matrix is used for defining a plurality of descriptors including at least an image acquisition position, a rotation, and an image field of view of the frame. A set of training data, generated from the frames and descriptors, is used for training a model. The trained model renders a 3D environment defined by a static 2D plane rendering of the printed product relative to a user-selected viewing location, with virtual images of the printed product as rendered from multiple viewing locations displayed on the user's display.

FIG. 2

**Description**

BACKGROUND OF THE INVENTION

Printed packaging often includes a plurality of steps between creation of the package design and the final product. A print job typically involves a print designer creating a package design, including artwork, which often includes specifications for color and graphic details that are important to the brand owner for whom the print job is being produced. After the design has been approved by the brand owner, the design is then converted to a printed product. The printing process often includes producing printing plates, such as flexographic plates, which typically have multiple separations, each separation corresponding to a single ink color. The printing process requires registration of the printed separations, proper fabrications of the plate corresponding to each separation, and proper selection of ink in combination to produce a print product that conforms to the expected quality of the brand owner. Prior to commencing a production run of printed products, which may involve creating hundreds of thousands of products, the brand owner typically approves a test run of the printed product. Print converters (e.g., printing press operators) are typically not located in the same geographic location as the brand owner representative responsible for approving quality. Historically, the brand owner representative has traveled to the location of the print converter to ensure that the quality of the run is acceptable.

There is a need in the field for print converters to be able to offer realistic remote viewing capabilities that can permit remote press approval.

SUMMARY OF THE INVENTION

One aspect of the invention relates to a method for creating a virtual 3D image of a printed product, such as a plastic or paper label, an unfolded folding carton, a pouch, or an unformed can. The method includes the steps of capturing a plurality of images of the printed product from a plurality of viewing perspectives, each image defining a frame, and comparing each frame to a reference image using a feature matching algorithm to generate a homography matrix that defines a homography of the frame relative to the reference image. The method uses the homography matrix corresponding to each frame to define a plurality of descriptors comprising at least an image acquisition position, a rotation, and an image field of view of the frame. A set of training data is generated from the plurality of frames and the plurality of descriptors for each frame, and that set of training data is used for training a model. The method further includes running the trained model to render a 3D environment defined by a static 2D plane comprising a rendering of the printed product relative to a user-selected viewing location, wherein an output of the trained model comprises one or more virtual images of the printed product as rendered from one or more user-selected viewing locations, which are displayed on a display viewable by the user. The reference image may include an image selected from the plurality of frames or a file (e.g., a PDF) from which the printed product was generated. In exemplary embodiments, the feature matching algorithm may be a SIFT algorithm, and the model may be a FlatNeRF model.

Some method embodiments may include accelerating a rate of display of the virtual images by running the model to generate a complete offline rendering of the print product for a set of predefined viewing directions, storing the complete offline rendering in computer memory, and when displaying the virtual images, interpolating between the predefined viewing direction renderings based on a current viewing direction relative to a center of each virtual image. The interpolation may be performed on a per-pixel basis, using an accurate viewing direction for each pixel.

In embodiments, the method includes capturing the plurality of frames in a first location and transmitting the output of the model, or the model itself, over a communications network to a computer processor associated with the display of the user, wherein the user is located remote from the first location. In embodiments, the display of the user may comprise a virtual reality display. In preferred embodiments, the print product is a proof generated by a printing process and the method is used for providing an approval or non-approval of the proof by the user prior to printing a plurality of instances of the printing product.

Another aspect of the invention relates to a system for creating a virtual image of a printed product. The system includes at least one digital image capture device for capturing a plurality of images of the printed product from a plurality of viewing perspectives, each image defining a frame; a digital memory for storing the plurality of images; a display; and a user interface controllable by a user. At least one computer processor is connected to the digital memory and programmed with instructions for causing the processor to: compare each frame to a reference image using a feature matching algorithm to generate a homography matrix that defines a homography of the frame relative to the reference image; define, based upon the homography matrix corresponding to each frame, a plurality of descriptors comprising at least an image acquisition position, a rotation, and an image field of view of the frame; generate a set of training data from the plurality of frames and the plurality of descriptors for each frame; train a model using the set of training data; and run the trained model to render a 3D environment defined by a static 2D plane comprising a rendering of the printed product relative to a viewing location selected by the user using the user interface. An output of the trained model comprises one or more virtual images of the printed product corresponding to one or more user-selected viewing locations of the camera; and the instructions further include instructions for causing the processor to display the one or more virtual images on the display.

In embodiments, the image capture device may comprise a video camera wherein each frame comprises a frame of video captured by the video camera. In other embodiments, the image capture device comprises at least one camera configured to capture a static image and each frame may comprise a static image captured by the camera. In embodiments, the image capture device may include a plurality of video cameras or still image cameras. The display may comprise a virtual reality display. In embodiments, the display is located geographically remote from the image capture device and the at least one processor comprises at least a first processor configured for processing the images, training the model, and running the model, and at least a second processor is configured to cause the display to display the virtual images output by the model. The second processor may be connected to a computer memory configured to store a plurality of complete renderings generated by the model for a plurality of predetermined viewing angles, wherein the second processor is configured to interpolate between the complete renderings for viewing angles outside of the plurality of predetermined viewing angles and to generate the virtual images for display based upon the interpolation.

Yet another aspect of the invention relates to non-transitory computer memory media programmed with machine readable instructions for causing a computer processor to perform method steps of receiving a plurality of images of the printed product captured from a plurality of viewing perspectives, each image defining a frame; comparing each frame to a reference image using a feature matching algorithm to generate a homography matrix that defines a homography of the frame relative to the reference image; using the homography matrix corresponding to each frame, defining a plurality of descriptors comprising at least an image acquisition position, a rotation, and an image field of view of the frame; generating a set of training data from the plurality of frames and the plurality of descriptors for each frame; training a model using the set of training data; running the trained model to render a 3D environment defined by a static 2D plane embodying a rendering of the printed product viewed from a user-selectable viewing location relative to the product; and causing a display to display virtual images of the printed product corresponding to the user-selected viewing locations.

BRIEF DESCRIPTION OF THE DRAWINGS

FIG. 1 is a schematic diagram of an exemplary method in accordance with an embodiment of the invention.

FIG. 2 is a schematic diagram of an exemplary system in accordance with an embodiment of the invention.

DETAILED DESCRIPTION OF THE INVENTION

The methods and systems as described herein offer print converters the ability to capture images or videos of printed packages from multiple perspectives and transform the captured images into a 3D viewing experience, eliminating the need for brand owners to travel, and allowing them to review the package remotely.

The solution is particularly useful for flat packages, including but not limited to plastic or paper labels, unfolded folding cartons, pouches or cans that have not yet been formed.

According to one embodiment of the invention, a video or selection of photos comprising a plurality of frames of the printed product is compared to a reference. As is known in the art, a video comprises a series of static images captured at a regular interval (typically 26 frames per second, but not limited to any particular speed). Digital cameras are often configurable to snap a series of images at a regular interval. Even "live" images captured by a mobile device comprises multiple frames captured for each image capture. In some embodiments, the images may be captured by a mobile device that captures video or a series of static images while a photographer moves the camera to capture images from a plurality of perspectives, which may include a plurality of angles and a plurality of distances from the printed product. In other embodiments, a digital camera may move in a controlled, predetermined path (e.g., with a robotic arm) while shooting video or still images at a predetermined rate. In still other embodiments, a plurality of digital cameras may be mounted in a set "photo booth" arrangement to take a plurality of photos or video from predetermined locations, which may be static locations or dynamic locations relative to the image as the set of cameras or the printed product may be moved relative to one another. For example, a set of cameras may be fixed, and the printed product may be located on a turntable (preferably with lighting affixed to or otherwise aligned to rotate with the turntable), or the printed product may be fixed, and the set of cameras may be moveable relative to the fixed location of the printed product.

The reference may be a PDF, such as a PDF corresponding to the design corresponding to the print job, an image of the actual printed product, or an image rendered from the PDF. The reference may be extracted from the frames.

The frames are preprocessed based on the provided reference. A feature matching algorithm such as SIFT may be employed to identify a homography matrix that defines a position of the frame relative to the reference. Once all frames have been preprocessed, the homography matrix for each frame can enable detection of: (a) camera position and rotation per frame; and (b) camera field of view.

An exemplary method uses gradient descent process to generate a set of training data resembling the following format:

***Position on reference + incoming view vector  => RGB result***          *Eq. 1*

wherein the position on the reference is a set of x + y coordinates and the incoming view vector is a normalized vector pointing from the position on the reference to the camera position. This produces a training set that conforms to Equation 2.

$$(x, y, \theta, \phi) \rightarrow (R, G, B)$$

Eq. 2

This training set is sufficient to train a model, such as a FlatNeRF model, which is a 2D version of the well-known NeRF model. The model is not limited to any particular architecture, however. FlatNeRF makes use of multiresolution hash encoding such as is described by MULLER et al. "Instant Neural Graphics Primitives with a Multiresolution Hash Encoding," ACM Transactions on Graphics, Vol. 41, Issue 4, Art. 102, pp 1-15 (2022), incorporated herein by reference in its entirety. The x,y directions are sent through the multiresolution hash encoding and then the hashes are appended to a spherical-harmonics-encoded view direction, which is sent through a feedforward neural network that will output RGB colors.

Running

At runtime of the trained model, the model generates a 3D environment comprising a static 2D plane and a user-specified, movable viewing position, for example as displayed and controlled by a Virtual Reality (VR) interface. For example, a set of VR goggles and gloves may allow a user to virtually "hold" the virtual print product, wherein the relative positions of the gloves and goggles comprise user inputs to the model, which generates output in the form of a plurality of images that are displayed on the headset display. For each visible pixel in the plane, the view direction is calculated, and the model is evaluated, showing what the package would look like in real life more accurately than classical 3D systems that try to approximate physical effects, such as metallic effects, holograms, and the like. As may be understood, viewability of such effects may depend upon lighting present at the time of image capture. To the extent that lighting intensity, angle, and spectra are also important variables, multiple sets of images may be captured using different lighting environments, which may permit the user to toggle through different environments for the inspection. The VR interface is not limited to a goggle implementation, and may comprise any type of VR interface known in the art.

For optimal viewing, the display is color calibrated so that the color observed is true to the color that a user would experience in the lighting environment in which the images were captured. The remote viewing experience not only permits the brand owner to inspect for proper color, but also for defects or damage visible on the package in virtual 3D.

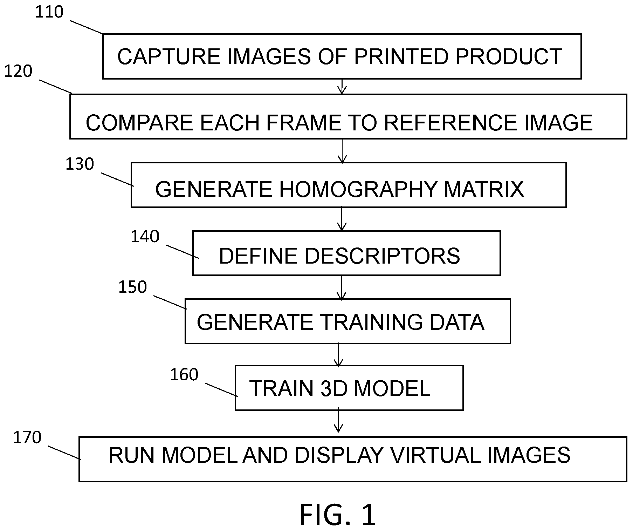

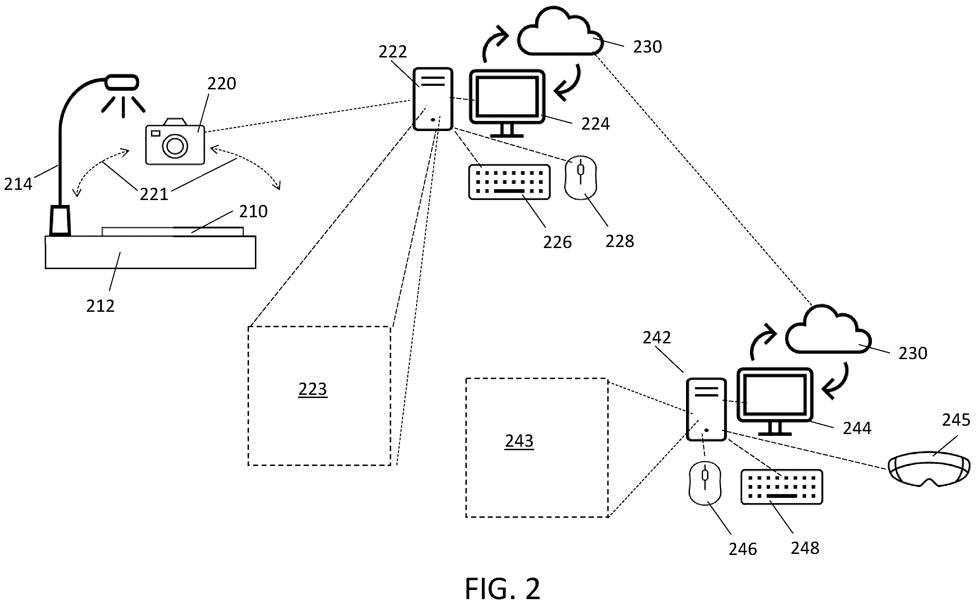

Thus, an exemplary method for creating a virtual image of a printed product is depicted in FIG. 1 with reference to the exemplary system depicted in FIG. 2. The system includes at least one digital image capture device 220 for capturing a plurality of images of the printed product from a plurality of viewing perspectives, each image defining a frame. Although depicted as a single camera 220 with arrows 221 representing movement of the camera relative to the printed product 210 disposed on a stage 212 relative to light source 214, it should be understood that this depiction is intended to represent any and all of the configurations as described herein, including those with multiple cameras, a moveable (e.g. rotatable) stage, a video or still camera moved using a robotic arm (not shown), etc. It should also be understood that the relative positions of the light source, the camera, the printed product, and the stage are not intended to be to scale or otherwise accurate with respect to configuration of the lighting to avoid shadows or to promote desired effects (e.g. directional light induced visual effects visible from predetermined viewing angles).

Digital memory 230 may be configured for storing the plurality of images as well as other machine readable instructions for causing processor 222 to perform certain steps. Display 224 is configured to display images and other information as controlled by the processor, and at least one user interface (e.g., keyboard 226 and mouse 228, but not limited thereto) is controllable by a user. In embodiments, the display may have touch screen capabilities, in which case the user interface may encompass the touch screen. Likewise, the camera may comprise a mobile device camera that is integrated with the computer processor and touch-screen display. Computer processor 222, connected to digital memory 223, may be programmed with instructions for causing the processor to perform the method steps as depicted in FIG. 1.

The method includes the steps of 110, capturing a plurality of images of the printed product (e.g., with an image capture device such as a camera 220) from a plurality of viewing perspectives, each image defining a frame. In step 120, each frame is compared to a reference image using a feature matching algorithm to generate, in step 130, a homography matrix that defines a homography of the frame relative to the reference image. In step 140, using the homography matrix corresponding to each frame, descriptors are defined, comprising at least an image acquisition position, a rotation, and an image field of view of the frame. Step 150 includes generating a set of training data from the plurality of frames and the plurality of descriptors for each frame, and in step 160, training a model using the set of training data. In step 170, the trained model is run to render a 3D environment defined by a static 2D plane comprising a rendering of the printed product relative to a user-selected viewing location, wherein an output of the trained model includes one or more virtual images of the printed product as rendered from one or more user-selected viewing locations, and the one or more virtual images are displayed on a display viewable by the user.

As described herein, the reference image may comprise an image selected from the plurality of frames or a PDF from which the printed product was generated. The printed product may be, for example, a plastic or paper label, an unfolded folding carton, a pouch, or an unformed can, and may be a proof generated by a printing process, wherein the method is used for providing an approval or non-approval of the proof by the user prior to printing a plurality of instances of the printing product. The plurality of frames may be captured in a first location by a first computer system (i.e. comprising components 222, 223, 224, 226, 228) and the output of the model or the model itself (e.g. as embodied by instructions stored in memory 223) is transmitted over a communications network 230 to a computer processor 242 associated with the display 244 of the user (and which may also have an associated user interface, including but not limited to keyboard 248 and mouse 246 and associated computer memory, 243), wherein the user is located remote from the first location. The display of the user may include a virtual reality display 245.

Accelerating

Because executing the exemplary model may be sluggish on less powerful hardware (or may suffer from latency, if the model is located "in the cloud" and feeding images to a local processor configured to run the display), various methods may be used for accelerating it.

In a first embodiment, a complete offline render of the package is generated using the model (e.g., as implemented in instructions stored in memory 223 for causing processor 222 to run the model) to generate a set of images from predefined viewing directions, which are stored in computer memory (e.g., memory 243). During display of the virtual images to the user (e.g., on display 244 or 245), interpolation between these renders is performed based on the current viewing direction selected by the user towards the center of the image.

In a second embodiment, an improvement over the first method involves conducting this interpolation on a per-pixel basis, using the accurate viewing direction for each pixel. With enough prerendered images, this approach converges precisely to the machine learning model while achieving significantly faster performance.

Both acceleration solutions are also independent of any specific model. If a new model architecture emerges that yields superior results or better training outcomes, it can also be adapted into this accelerated version.

Although the invention is illustrated and described herein with reference to specific embodiments, the invention is not intended to be limited to the details shown. Rather, various modifications may be made in the details within the scope and range of equivalents of the claims and without departing from the invention.

**Claims**

1.  A method for creating a virtual 3D image of a printed product, the method comprising the steps of:

    (a) capturing a plurality of images of the printed product from a plurality of viewing perspectives, each image defining a frame;
    (b) comparing each frame to a reference image using a feature matching algorithm to generate a homography matrix that defines a homography of the frame relative to the reference image;
    (c) using the homography matrix corresponding to each frame, defining a plurality of descriptors comprising at least an image acquisition position, a rotation, and an image field of view of the frame;
    (d) generating a set of training data from the plurality of frames and the plurality of descriptors for each frame;
    (e) training a 3D model using the set of training data;
    (f) running the trained model to render a 3D environment defined by a static 2D plane comprising a rendering of the printed product relative to a user-selected viewing location, wherein an output of the trained model comprises one or more virtual images of the printed product as rendered from one or more user-selected viewing locations, and
    (g) displaying the one or more virtual images on a display viewable by the user.

2.  The method of claim 1, wherein the reference image comprises an image selected from the plurality of frames.

3.  The method of claim 1, wherein the reference image comprises a PDF from which the printed product was generated.

**4.** The method of claim 1, wherein the feature matching algorithm comprises a SIFT algorithm.

**5.** The method of claim 1, wherein the model comprises a FlatNeRF model.

**6.** The method of claim 1, further comprising accelerating a rate of display of the virtual images by running the model to generate a complete offline rendering of the print product for a set of predefined viewing directions, storing the complete offline rendering in computer memory, and when displaying the virtual images, interpolating between the predefined viewing direction renderings based on a current viewing direction relative to a center of each virtual image.

**7.** The method of claim 6, comprising performing the interpolation on a per-pixel basis, using an accurate viewing direction for each pixel.

**8.** The method of claim 1, wherein the printed product is selected from a group consisting of: a plastic or paper label, an unfolded folding carton, a pouch, or an unformed can.

**9.** The method of claim 1, comprising capturing the plurality of frames in a first location and transmitting the output of the model or the model itself over a communications network to a computer processor associated with the display of the user, wherein the user is located remote from the first location.

**10.** The method of claim 9, wherein the display of the user comprises a virtual reality display.

**11.** The method of claim 10, wherein the print product is a proof generated by a printing process and the method is used for providing an approval or non-approval of the proof by the user prior to printing a plurality of instances of the printing product.

**12.** The method of claim 1, wherein the step of capturing the plurality of images comprises using a video camera to capture the images.

**13.** The method of claim 1, wherein the step of capturing the plurality of images comprises using a camera to capture a plurality of static images.

**14.** A system for creating a virtual image of a printed product, the system comprising:

at least one digital image capture device for capturing a plurality of images of the printed product from a plurality of viewing perspectives, each image defining a frame;
a digital memory for storing the plurality of images;
a display;
a user interface controllable by a user;
at least one computer processor connected to the digital memory, the processor programmed with instructions for causing the processor to:

compare each frame to a reference image using a feature matching algorithm to generate a homography matrix that defines a homography of the frame relative to the reference image;
define, based upon the homography matrix corresponding to each frame, a plurality of descriptors comprising at least an image acquisition position, a rotation, and an image field of view of the frame;
generate a set of training data from the plurality of frames and the plurality of descriptors for each frame;
train a model using the set of training data;
run the trained model to render a 3D environment defined by a static 2D plane comprising a rendering of the printed product relative to a viewing location selected by the user using the user interface, wherein an output of the trained model comprises one or more virtual images of the printed product corresponding to one or more user-selected viewing locations of the camera; and
display the one or more virtual images on the display.

**15.** The system of claim 14, wherein the image capture device comprises a video camera and each frame comprises a frame of video captured by the video camera.

**16.** The system of claim 14, wherein the image capture device comprises at least one camera configured to capture a static image and each frame comprises a static image captured by the camera.

17. The system of claim 14, wherein the image capture device comprises a plurality of video cameras or still image cameras.

18. The system of claim 14, wherein the display comprises a virtual reality display.

19. The system of claim 14, wherein the display is located geographically remote from the image capture device and the at least one processor comprises at least a first processor configured for processing the images, training the model, and running the model, and at least a second processor is configured to cause the display to display the virtual images output by the model.

20. The system of claim 19, wherein the second processor is connected to a computer memory configured to store a plurality of complete renderings generated by the model for a plurality of predetermined viewing angles, and the second processor is configured to interpolate between the complete renderings for viewing angles outside of the plurality of predetermined viewing angles and to generate the virtual images for display based upon the interpolation.

21. Non-transitory computer memory media programmed with machine readable instructions for causing a computer processor to perform method steps of:

(a) receiving a plurality of images of the printed product captured from a plurality of viewing perspectives, each image defining a frame;
(b) comparing each frame to a reference image using a feature matching algorithm to generate a homography matrix that defines a homography of the frame relative to the reference image;
(c) using the homography matrix corresponding to each frame, defining a plurality of descriptors comprising at least an image acquisition position, a rotation, and an image field of view of the frame;
(d) generating a set of training data from the plurality of frames and the plurality of descriptors for each frame;
(e) training a 3D model using the set of training data;
(f) running the trained 3D model to render a 3D environment defined by a static 2D plane embodying a rendering of the printed product viewed from a user-selectable viewing location relative to the product; and
(g) causing a display to display virtual images of the printed product corresponding to the user-selected viewing locations.

```
          110
                 ┌──────────────────────────────────────┐
                 │  CAPTURE IMAGES OF PRINTED PRODUCT    │
          120    └──────────────────────────────────────┘
               ┌──────────────────────────────────────────┐
               │  COMPARE EACH FRAME TO REFERENCE IMAGE    │
          130  └──────────────────────────────────────────┘
                 ┌────────────────────────────────────┐
                 │   GENERATE HOMOGRAPHY MATRIX        │
          140    └────────────────────────────────────┘
                     ┌──────────────────────────┐
                     │   DEFINE DESCRIPTORS      │
          150        └──────────────────────────┘
                    ┌──────────────────────────────┐
                    │   GENERATE TRAINING DATA      │
          160       └──────────────────────────────┘
                      ┌─────────────────────┐
                      │   TRAIN 3D MODEL     │
          170         └─────────────────────┘
               ┌──────────────────────────────────────────┐
               │  RUN MODEL AND DISPLAY VIRTUAL IMAGES     │
               └──────────────────────────────────────────┘
```

FIG. 1

FIG. 2

Europäisches
Patentamt
European
Patent Office
Office européen
des brevets

# EUROPEAN SEARCH REPORT

**Application Number**

EP 24 17 8223

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2010/132919 A1 (NEWBOUND PTY LTD [AU]; LOVE JEFFREY CARL [AU]) 25 November 2010 (2010-11-25) * page 8 * | 1-15 | INV. G06T11/00 |
| A | Anonymous: "Camera pose from homography?", , 3 July 2019 (2019-07-03), XP093251599, Retrieved from the Internet: URL:https://answers.opencv.org/question/166242/camera-pose-from-homography/ [retrieved on 2025-02-18] * the whole document * | 1-15 | |
| A | ZIRUI WANG ET AL: "NeRF--: Neural Radiance Fields Without Known Camera Parameters", ARXIV.ORG, 19 February 2021 (2021-02-19), XP081884726, * the whole document * | 1-15 | TECHNICAL FIELDS SEARCHED (IPC) G06T |
| L | Anonymous: "La Inteligencia Artificial en el Packaging: Oportunidades, Aplicaciones y Tendencias Futuras", , 17 December 2024 (2024-12-17), XP093251657, Retrieved from the Internet: URL:https://graphik.es/la-inteligencia-artificial-en-el-packaging-oportunidades-aplicaciones-y-tendencias-futuras/ [retrieved on 2025-02-18] * the whole document * | | |

The present search report has been drawn up for all claims

| Place of search | Date of completion of the search | Examiner |
|---|---|---|
| Munich | 20 February 2025 | Rockinger, Oliver |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 17 8223

This annex lists the patent family members relating to the patent documents cited in  the above-mentioned European search report.
The members are as contained in the European Patent Office EDP file on
The European Patent Office is in no way liable for these particulars which are merely given for the purpose of information.

20-02-2025

| Patent document cited in search report | Publication date | Patent family member(s) | Publication date |
|---|---|---|---|
| WO 2010132919 A1 | 25-11-2010 | NONE | |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **MULLER et al.** Instant Neural Graphics Primitives with a Multiresolution Hash Encoding. *ACM Transactions on Graphics*, 2022, vol. 41 (4), 1-15